# EUROPEAN PATENT SPECIFICATION

(11) **EP 4 103 441 B1**
(45) Date of publication and mention of the grant of the patent: **01.05.2024**
(21) Application number: 21753704.2
(22) Date of filing: 26.01.2021
(51) Int. Cl.: B61B 13/10, E05F 15/635

(54) **APPARATUS FOR INTERCONNECTING AND ISOLATING VERY LARGE EVACUATED VOLUMES**
GERÄT ZUM VERBINDEN UND ISOLIEREN SEHR GROSSER EVAKUIERTER VOLUMINA
APPAREIL D'INTERCONNEXION ET D'ISOLEMENT DE TRÈS GRANDS VOLUMES SOUS VIDE

(30) Priority: 13.02.2020 US 202062975817 P
(43) Date of publication of application: 21.12.2022
(73) Proprietor: Flowserve Pte. Ltd., Singapore 637345 (SG)
(72) Inventor: PETERSON, John K., Irving, Texas 75039 (US); LANEY, Matthew W., Irving, Texas 75039 (US)
(74) Representative: Petraz, Gilberto Luigi
(86) International application number: PCT/US2021/015071
(87) International publication number: WO 2021/162850

(56) References cited:
- CN-A- 109 356 647
- CN-A- 110 203 213
- JP-A- H07 172 579
- JP-A- 2009 011 182
- KR-B1- 101 920 414
- US-A- 4 470 576
- US-A1- 2016 230 899

## Description

### RELATED APPLICATIONS

This application claims the benefit of U.S. Provisional Application No. 62/975,817, filed February 13, 2020.

### FIELD OF THE INVENTION

The invention relates to vacuum systems, and more particularly, to apparatus and methods for isolating and interconnecting very large evacuated volumes such as segments of an evacuated transportation system.

### BACKGROUND OF THE INVENTION

The conventional methods of conveying groups of people over large distances can be categorized into four basic types: rail, road, water, and air. Transportation by road and water tends to be relatively inexpensive, but comparatively slow. Travel by air is much faster, but is expensive. Rail transportation of people can be both slow and expensive.

Several alternatives have been proposed for rapidly and economically conveying large numbers of people by transporting them in modules or "capsules" that are supported by rails and travel over long distances through specially prepared tubes that have been evacuated to eliminate air resistance. One example is supersonic or hypersonic transport of passenger capsules through evacuated underground tubes. According to this approach, often referred to as "hyperloop," capsules are propelled over long distances through a series of interconnecting transportation tubes or "segments" that are evacuated to reduce air friction past the capsules. The capsules can be conventionally suspended, or they can be magnetically levitated.

A common feature of these proposed "evacuated tube" transportation systems is that the evacuated tubes will be organized into segments that can be isolated from each other so that individual segments can be vented for maintenance without venting the entire tube. These tube segments have very large volumes, each segment being, for example, five meters in diameter and between 10 and 20 miles in length.

The very large scale of these tube segments gives rise to special challenges that must be overcome. For example, it is necessary to evacuate the segments as rapidly and efficiently as possible.

Another significant challenge is to find a way to join together adjacent tube segments, and to isolate selected tube segments as needed, so that they can be vented and maintained. One approach is to include a relatively narrow "bridging" segment between each pair of adjacent tube segments, to which the adjacent ends of the two tube segments can be attached and sealed. A large valve can be incorporated within the bridging segment, for example a valve having a gate element that can be raised and lowered to seal the passage that penetrates the bridging segment. Closing the gate valves at both ends of a segment thereby allows the segment to be vented while the other segments retain their vacuums.

However, this approach suffers from several shortcomings. For example, maintenance cannot be performed on the structures and apparatus that are located within the interior of the bridging segment without venting at least one, and possibly both, of the tube segments that are joined to it. Also, the requirement to reliably support the weight of the gate element as it is lifted and lowered poses significant engineering challenges, including requirements for a strong mechanical suspension system and a very powerful motor or motors that are able to lift the gate element, all of which can be costly and can cause the gate to consume large quantities of energy when in operation. A further challenge is the requirement to provide a gap in the rail or rails that support the transportation capsules, so that the gate element is able to pass through the rails when it is raised and lowered.

Document US2016/230899A1 discloses gate valves and airlocks for a transportation system. Document CN110203213A discloses a partition device of vacuum pipeline.

What is needed, therefore, is a system for interconnecting adjacent tube segments of an evacuated tube transportation system that can be maintained without venting either adjacent tube segment, that minimizes the challenges associated with supporting, opening, and closing a very large valve, and preferably that does not introduce a discontinuity into the transportation capsule support rail or rails.

### SUMMARY OF THE INVENTION

The present invention is an evacuated tube transportation system tube segment bridging module that can be maintained without venting either adjacent tube segment, and that minimizes the challenges associated with supporting, opening, and closing a very large valve. In embodiments, the disclosed bridging module does not introduce any discontinuity into the transportation capsule support rail or rails.

The disclosed bridging module comprises a portal section that includes opposing portals that are configured for sealed attachment to adjoining tube segments. The bridging module further comprises two gate elements that slide horizontally between a storage configuration in which they do not overlap a passage formed between the portals, and a deployed configuration in which the gate elements fully overlap and seal the portals.

In addition, the bridging module includes an expanding mechanism that expands the gate elements away from each other when they are in the deployed configuration, so that the gate elements are pressed outwardly against the portals and form seals therewith. In embodiments, the expanding mechanism is a pneumatic system. For example, in embodiments the expanding mechanism includes four air-driven "opposed" double pneumatic pistons located proximal to and between four opposing "corners" of the gate elements.

Accordingly, when the gate elements are deployed and the expanding mechanism is engaged, both portals of the bridging module are fully sealed, so that the interior of the bridging module can be vented and accessed without any need to vent either of the adjoining tube segments.

Furthermore, the horizontal action of the gate elements enables their weight to be supported by a fixed support system such as rails, so that the deployment motor and drive mechanism need only be powerful enough to overcome the inertia of the gate elements and any frictional resistance of the support system. In embodiments, the drive mechanism includes a rack-and-pinion driven by a motor. The gate elements can be supported by linear bearings. Additional guide rails can be provided at the tops of the gate elements to maintain the stability of the gate elements, which can also engage with the gate elements via linear bearings.

In embodiments, the bridging segment further comprises a rail carriage that forms a connection between the capsule support rails of the adjoining tube segments. When the gate elements are deployed, the rail carriage is lifted vertically so that the gate elements and associated apparatus are able to pass beneath. And when the gate elements are returned to their storage locations the rail carriage is lowered back into position, where it re-engages with the capsule support rails of the adjacent tube segments. In embodiments, the rail carriage operates along vertical rails that run along both sides of a carriage housing that extends above the portals and forms part of the bridging module.

In embodiments, the motors that drive the gate elements and/or the rail carriage include continuous position indications and/or diagnostics that are remotely accessible, for example via Bluetooth. In embodiments, either or both of the gate elements and/or the rail carriage include limit switches that indicate fully open and closed positions. In embodiments the continuous position indications are calibrated according to signals received from the limit switches.

Embodiments include redundant limit switches so that limits are not exceeded even if one of the limit switches fails.

It should be noted that while the present invention is disclosed and described in the context of evacuated tube transportation systems, the invention as such is not limited to transportation systems, but is applicable to any circumstance where it is necessary to interconnect and reversibly isolate adjacent, large, evacuated volumes.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

Fig. 1A is a view from above of a pair of evacuated transportation tube segments interconnected by a bridging module according to an embodiment of the present invention;
Fig. 1B is a front view of an embodiment of the present invention, drawn to scale;
Fig. 2A is a front perspective view drawn to scale of the embodiment of Fig. 1 shown with its front and rear covers removed and the gate elements in their stored configuration;
Fig. 2B is a close-up view drawn to scale of the drive mechanism of the embodiment of Fig. 2A;
Fig. 3A is a front view drawn to scale of the embodiment of Fig. 2A shown with the gate elements in their deployed configuration;
Fig. 3B is a front view drawn to scale of the embodiment of Fig. 3A shown with the front gate element removed; and
Fig. 3C is a top view drawn to scale of the embodiment of Fig. 3A shown with the top cover and other elements removed so that an opposed piston of the expanding mechanism is visible.

### DETAILED DESCRIPTION

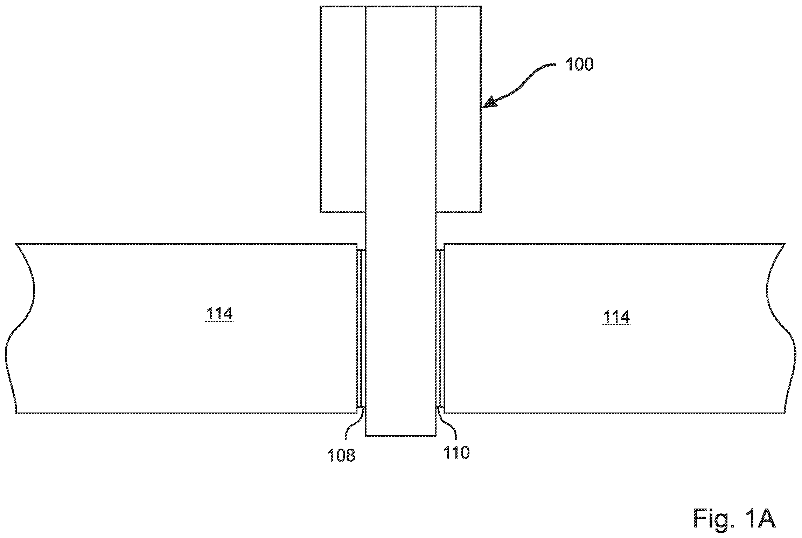

With reference to Fig. 1A, the present invention is a tube segment bridging module 100 that provides connectivity between two adjacent tube segments 114 of an evacuated tube transportation system. The bridging module 100 can be vented to atmosphere without venting either adjacent tube segment 114, and also minimizes the challenges associated with supporting, opening, and closing a very large valve. In embodiments, the disclosed bridging module 100 does not introduce any discontinuity into the transportation capsule support rail or rails of the evacuated tube transportation system.

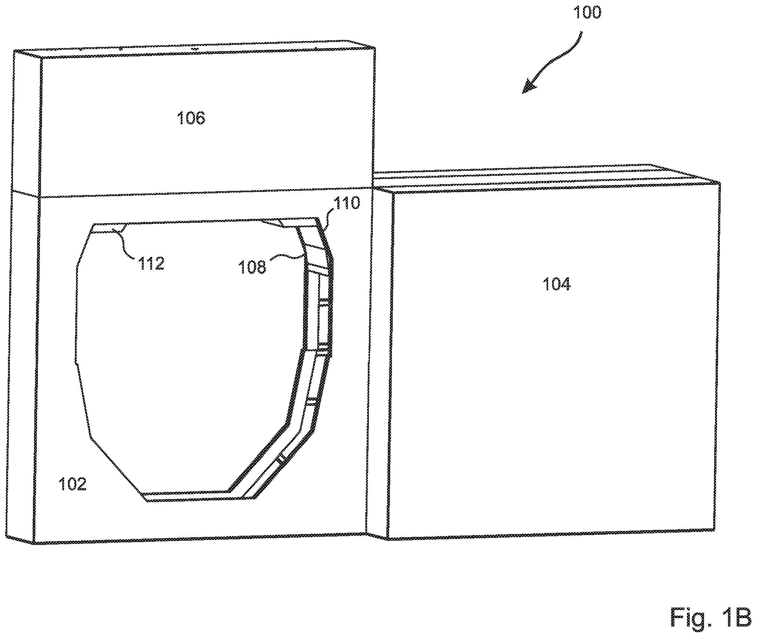

With reference to Fig 1B, the disclosed bridging module 100 comprises a portal section 102 that includes opposing portals 108, 110 configured for sealed attachment to adjoining tube segments 114, and a storage section 104. In the embodiment of Fig. 1, the bridging module 100 further includes a rail carriage section 106 as discussed in more detail below. Portions of a rail carriage 112 can be seen in the figure extending downward into a passage formed between the portals 108, 110. The rail carriage 112 forms a connection, in embodiments, between overhead rails that support transportation capsules in the adjacent evacuated transportation tube segments 114.

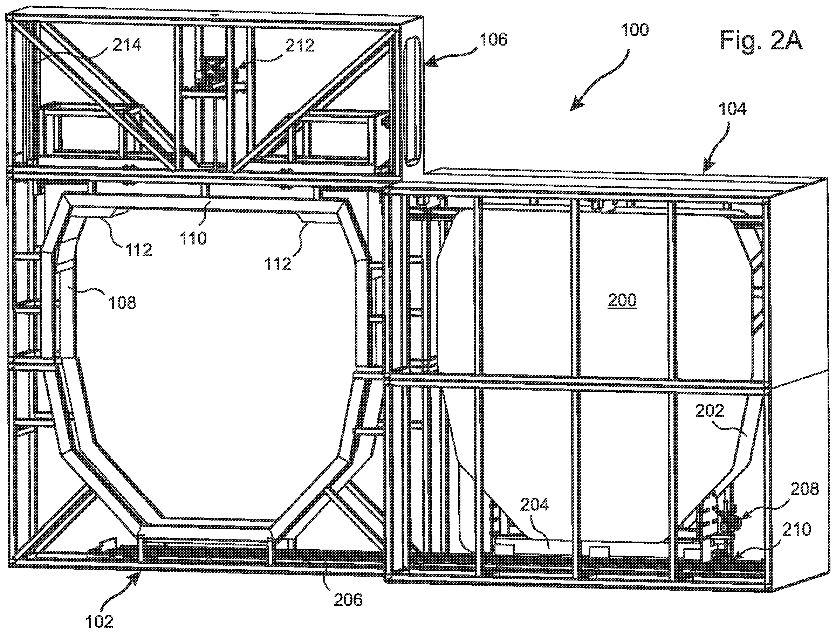

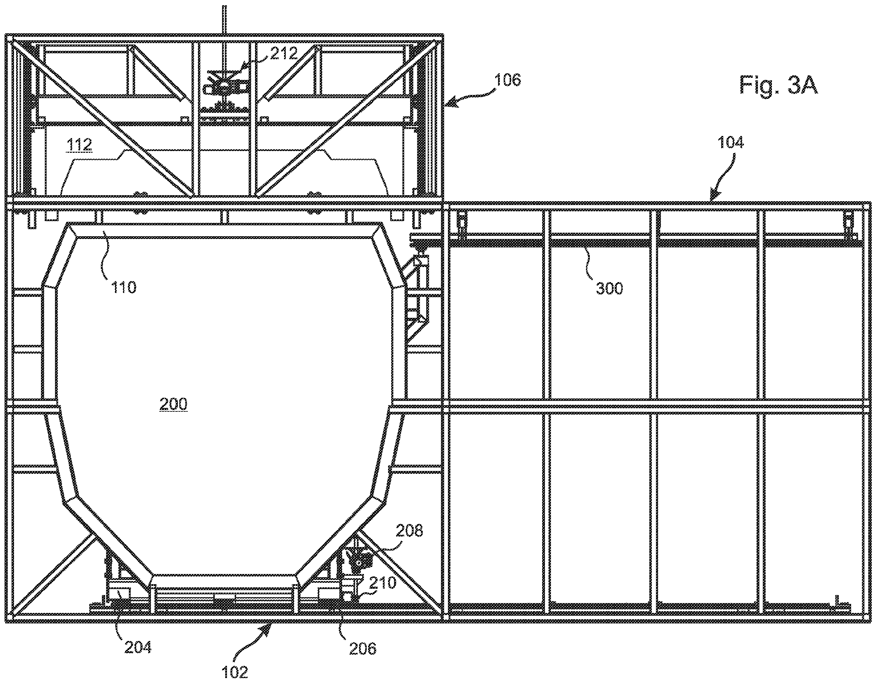

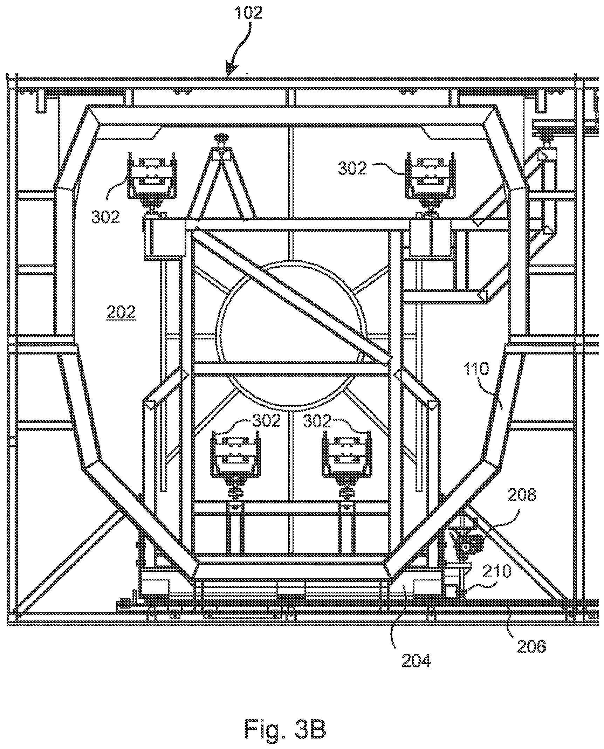

Fig. 2A is a front perspective view of the embodiment of Fig. 1 in which the front, rear, and side panels have been removed. It can be seen in the figure that the bridging module further includes a pair of gate elements 200, 202 that are maintained in a parallel relationship to each other. The gate elements 200, 202 are configured to slide horizontally between a stored configuration in the storage section 104, as shown in Fig. 2A, where they do not overlap with the portals 108, 110, and a deployed configuration in the portal section, where the gate elements 200, 202 fully overlap the portals 108, 110 and can form a seal therewith, as is discussed in more detail below with reference to Figs. 3A and 3B.

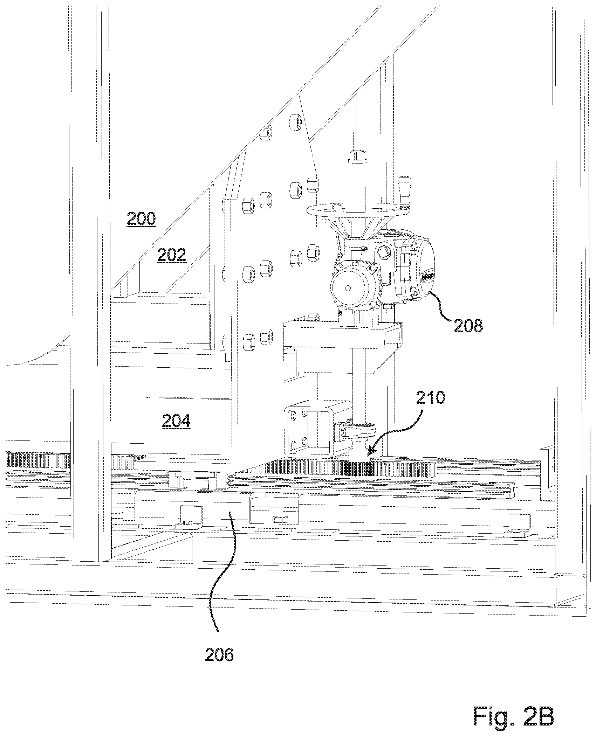

With reference to Fig. 2B, the horizontal deployment of the gate elements 200, 202 enables their weight to be supported by a fixed support system such as by a carriage 204 that rests on rails and/or on linear bearings 206, so that the deployment motor 208 and drive mechanism 210 need only be powerful enough to overcome the inertia of the gate elements and any frictional resistance of the support system. In the embodiment of Fig. 2B, the drive mechanism 210 includes a rack-and-pinion driven by a motor. The tops of the gate elements 200, 202 can be supported by additional guide rails (elements 300 in Fig. 3A), which can also engage with the gate elements 200, 202 via linear bearings to maintain the stability of the gate elements 200, 202.

With reference again to Fig. 2A, it can be seen in the figure that the carriage section 106 includes a lifting mechanism 212 configured to lift the rail carriage 112 upward so that the gate elements 200, 202 can be moved into place beneath them to seal the portals 108, 110.

Fig. 3A is a front view of the embodiment of Figs. 1-2B, with the front panels removed, that shows the gate elements 200, 202 in their deployed configuration within the portal section 102 of the bridging module 100. It can also be seen in the figure that the rail carriage 112 has been lifted by the lifting mechanism 212 so that the gate elements 200, 202 and associated structure can be positioned underneath.

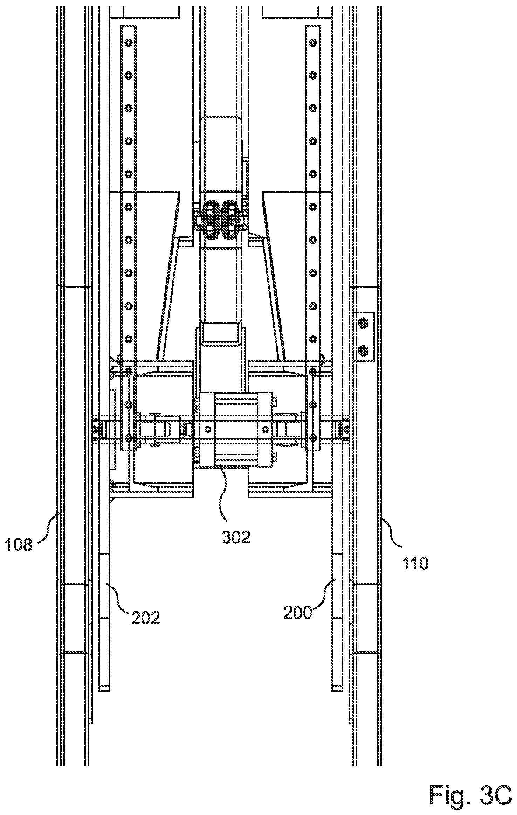

Fig. 3B presents a view that is similar to Fig. 3A, except that the nearer gate element 200 has been removed so that structure included between the gate elements 200, 202 can be seen. In particular, it can be seen in the figure that an expanding mechanism 302 is provided between the gate elements 200, 202 that is configured to expand the gate elements 200, 202 away from each other when they are deployed, so that they are pressed outwardly against the portals 108 110 and form seals therewith. In the embodiment of Fig. 3B, the expanding mechanism is a pneumatic system that includes four air-driven "opposed" pneumatic pistons 302 (i.e. double pistons that expand simultaneously in two opposite directions) located between and proximal to four opposing "corners" of the gate elements 200, 202. Fig. 3C is an enlarged view from above that shows one of the four opposed pneumatic pistons 302 in more detail. The top panel and a plurality of other structural elements have been removed from Fig. 3C so that the opposed air piston 302 and associated structures can be more clearly seen.

Accordingly, when the gate elements 200, 202 are deployed and the expanding mechanism 302 is engaged, both portals 108, 110 of the bridging module 100 are fully sealed, so that the interior of the bridging module 100 can be vented and accessed without any need to vent either of the adjoining tube segments (not shown).

As noted above, the bridging module in the illustrated embodiment further comprises a rail carriage 112 that forms a connection between the overhead capsule support rails of the adjoining tube segments 114. As is shown in Fig. 3A, when the gate elements 200, 202 are deployed, the rail carriage 112 is lifted vertically by a lifting mechanism 212 so that the gate elements 200, 202 and associated apparatus are able to pass beneath. And when the gate elements 200, 202 are returned to their stored configuration in the storage section 104, as shown in Fig. 2A, the rail carriage 212 is lowered back into position where it re-engages with the capsule support rails of the adjacent tube segments 114. In the embodiment of Fig. 2A, the rail carriage 212 operates along vertical rails 214 that run along both sides of a carriage housing that extends above the portal section 102.

In embodiments, the motors 208, 212 that drive the gate elements 200, 202 and/or the rail carriage 112 include continuous position indications and/or diagnostics that are remotely accessible, for example via Bluetooth. In embodiments, either or both of the gate elements 200, 202 and/or the rail carriage 112 include limit switches that indicate fully open and closed positions. In embodiments the continuous position indications are calibrated according to signals received from the limit switches, as is described in more detail in co-pending US application 15/648.959, also submitted by the present Applicant, which is incorporated herein by reference in its entirety for all purposes. Embodiments include redundant limit switches so that limits are not exceeded even if one of the limit switches fails.

It should be noted that while the present invention is disclosed and described in the context of evacuated tube transportation systems, the invention as such is not limited to transportation systems, but is applicable to any circumstance where it is necessary to interconnect and reversibly isolate adjacent, large, evacuated volumes.

The foregoing description of the embodiments of the invention has been presented for the purposes of illustration and description. Each and every page of this submission, and all contents thereon, however characterized, identified, or numbered, is considered a substantive part of this application for all purposes, irrespective of form or placement within the application. This specification is not intended to be exhaustive or to limit the invention to the precise form disclosed. Many modifications and variations are possible in light of this disclosure.

## Claims

1. A bridging module (100) configured to provide vacuum connectivity between first and second evacuated volumes (114), the bridging module (100) comprising:
a portal section (102) comprising opposing first and second portals (108, 110) configured for sealed attachment respectively to the first and second evacuated volumes (114);
first and second gate elements (200, 202) configured respectively to cover and seal the first and second portals (108, 110);
a storage section (104) horizontally extending from the portal section (102), the gate elements (200, 202) being horizontally translatable by a drive mechanism (210) between a deployed configuration in which the gate elements (200, 202) are located in the portal section (102) and form seals with the portals (108, 110), and a stored configuration in which the gate elements (200, 202) are located in the storage section (104) and do not overlap a passage formed between the portals (108, 110); and
an expanding mechanism (302) extending between the gate elements (200, 202) and configured to press the gate elements (200, 202) apart when the gate elements (200, 202) are in the deployed configuration, thereby pressing the gate elements (200, 202) against the portals (108, 110);
the bridging module (100) thereby providing unobstructed, evacuated connectivity between the evacuated volumes (114) when the gate elements (200, 202) are in the stored configuration; and
the bridging module (100) being isolated from the evacuated volumes (114) when the gate elements (200, 202) are in the deployed configuration, thereby enabling the evacuated volumes (114) to remain evacuated while the bridging module (100) is vented to atmosphere.

2. The bridging module (100) of claim 1, wherein the gate elements (200, 202) are stabilized by sliding attachment of tops thereof to upper rails (300).

3. The bridging module (100) of any preceding claim, wherein the drive mechanism (210) includes a continuous position indication.

4. The bridging module (100) of any preceding claim, wherein the drive mechanism (210) includes at least one range limiting mechanism that prevents the drive mechanism from translating the gate elements (200, 202) beyond a defined range.

5. The bridging module (100) of any preceding claim, wherein the drive mechanism (210) includes a continuous position indication that is calibrated according to signals received from at least one range limiting mechanism that prevents the drive mechanism (210) from translating the gate elements (200, 202) beyond a defined range.

6. The bridging module (100) of any preceding claim, wherein the drive mechanism (210) includes at least one of a continuous position indication and drive mechanism diagnostic information that is accessible by means of wireless communication.

7. The bridging module (100) of any preceding claim, wherein the expanding mechanism (302) is pneumatically driven.

8. The bridging module (100) of claim 7, wherein the expanding mechanism (302) includes four air-driven opposed pneumatic pistons located proximal to and between four opposing corners of the gate elements (200, 202).

9. The bridging module (100) of any preceding claim, wherein the first and second evacuated volumes (114) are tube segments of an evacuated tube transportation system.

10. The bridging module (100) of claim 9, further comprising a rail carriage (112) configured, when the gate elements (200, 202) are in the stored configuration, to provide rail continuity between overhead rails that support transportation capsules within the tube segments.

11. The bridging module (100) of claim 10, further comprising:
a rail carriage section (106) extending above the portal section (102); and
a lifting mechanism (212) configured to raise the rail carriage (112) above the gate elements (200, 202) when the gate elements (200, 202) are in the deployed configuration.

12. The bridging module (100) of claim 11, wherein the lifting mechanism (212) operates along vertical rails that run along both sides of a carriage housing located within the rail carriage section (106).

13. The bridging module (100) of any of claims 11 through 12, wherein the lifting mechanism (212) includes at least one range limiting mechanism that prevents the lifting mechanism (212) from translating the rail carriage (112) beyond a defined range.

14. The bridging module (100) of any of claims 11 or claim 12, wherein the lifting mechanism (212) includes a continuous position indication that is calibrated according to signals received from at least one range limiting mechanism that prevents the lifting mechanism (212) from translating the rail carriage (112) beyond a defined range.

15. The bridging module (100) of any of claims 11 through 14, wherein the lifting mechanism (212) includes at least one of a continuous position indication and lifting mechanism diagnostic information that is accessible by means of wireless communication.

## Patentansprüche

1. Brückungsmodul (100), das dafür ausgelegt ist, Vakuumkonnektivität zwischen ersten und zweiten evakuierten Volumina (114) bereitzustellen, wobei das Brückungsmodul (100) umfasst:
einen Portalabschnitt (102) umfassend entgegengesetzte erste und zweite Portale (108, 110), die für die abgedichtete Anbringung jeweils an den ersten und zweiten evakuierten Volumina (114) ausgelegt sind;
erste und zweite Torelemente (200, 202), die jeweils dafür ausgelegt sind, die ersten und zweiten Portale (108, 110) abzudecken und abzudichten;
einen Lagerungsabschnitt (104), der sich von dem Portalabschnitt (102) horizontal erstreckt, wobei die Torelemente (200, 202) von einem Antriebsmechanismus (210) zwischen einer eingesetzten Konfiguration, in der die Torelemente (200, 202) im Portalabschnitt (102) angeordnet sind und Abdichtungen mit den Portalen (108, 110) bilden, und einer gelagerten Konfiguration, in der die Torelemente (200, 202) im Lagerungsabschnitt (104) angeordnet sind und keinen Durchgang, der zwischen den Portalen (108, 110) ausgebildet ist, überlappen, horizontal verfahrbar sind; und
einen Spreizmechanismus (302), der sich zwischen den Torelementen (200, 202) erstreckt und dafür ausgelegt ist, die Torelemente (200, 202) auseinander zu drücken, wenn die Torelemente (200, 202) sich in der eingesetzten Konfiguration befinden, wodurch die Torelemente (200, 202) gegen die Portale (108, 110) gedrückt werden;
wobei das Brückungsmodul (100) dadurch unbehinderte, evakuierte Konnektivität zwischen den evakuierten Volumina (114) bereitstellt, wenn die Torelemente (200, 202) sich in der gelagerten Konfiguration befinden; und
das Brückungsmodul (100) von den evakuierten Volumina (114) isoliert ist, wenn die Torelemente (200, 202) sich in der eingesetzten Konfiguration befinden, wodurch es den evakuierten Volumina (114) ermöglicht wird, evakuiert zu bleiben, während das Brückungsmodul (100) zur Atmosphäre entlüftet wird.

2. Brückungsmodul (100) nach Anspruch 1, worin die Torelemente (200, 202) durch gleitende Anbringung von Oberteilen davon an oberen Schienen (300) stabilisiert werden.

3. Brückungsmodul (100) nach einem der vorhergehenden Ansprüche, worin der Antriebsmechanismus (210) eine kontinuierliche Positionsanzeige umfasst.

4. Brückungsmodul (100) nach einem der vorhergehenden Ansprüche, worin der Antriebsmechanismus (210) zumindest einen Bereichsbegrenzungsmechanismus umfasst, der den Antriebsmechanismus daran hindert, die Torelemente (200, 202) über einen definierten Bereich hinaus zu verfahren.

5. Brückungsmodul (100) nach einem der vorhergehenden Ansprüche, worin der Antriebsmechanismus (210) eine kontinuierliche Positionsanzeige umfasst, die gemäß Signalen kalibriert ist, die von zumindest einem Bereichsbegrenzungsmechanismus empfangen werden, der den Antriebsmechanismus (210) daran hindert, die Torelemente (200, 202) über einen definierten Bereich hinaus zu verfahren.

6. Brückungsmodul (100) nach einem der vorhergehenden Ansprüche, worin der Antriebsmechanismus (210) zumindest eine von einer kontinuierlichen Positionsanzeige und Antriebsmechanismus-Diagnoseinformationen umfasst, die durch drahtlose Kommunikation zugänglich sind.

7. Brückungsmodul (100) nach einem der vorhergehenden Ansprüche, worin der Spreizmechanismus (302) pneumatisch angetrieben wird.

8. Brückungsmodul (100) nach Anspruch 7, worin der Spreizmechanismus (302) vier luftgetriebene entgegengesetzte pneumatische Kolben umfasst, die proximal zu und zwischen vier entgegengesetzten Ecken der Torelemente (200, 202) angeordnet sind.

9. Brückungsmodul (100) nach einem der vorhergehenden Ansprüche, worin die ersten und zweiten evakuierten Volumina (114) Röhrensegmente eines evakuierten Rohrtransportsystems sind.

10. Brückungsmodul (100) nach Anspruch 9, ferner umfassend einen Schienenwagen (112), der dafür ausgelegt ist, wenn die Torelemente (200, 202) sich in der gelagerten Konfiguration befinden, Schienenkontinuität zwischen Hängeschienen bereitzustellen, die Transportkapseln innerhalb der Röhrensegmente stützen.

11. Brückungsmodul (100) nach Anspruch 10, ferner umfassend:
einen Schienenwagenabschnitt (106), der sich über dem Portalabschnitt (102) erstreckt; und
einen Hebemechanismus (212), der dafür ausgelegt ist, den Schienenwagen (112) über die Torelemente (200, 202) zu heben, wenn die Torelemente (200, 202) sich in der eingesetzten Konfiguration befinden.

12. Brückungsmodul (100) nach Anspruch 11, worin der Hebemechanismus (212) entlang vertikaler Schienen wirkt, die entlang beider Seiten eines Wagengehäuses verlaufen, das innerhalb des Schienenwagenabschnitts (106) angeordnet ist.

13. Brückungsmodul (100) nach einem der Ansprüche 11 bis 12, worin der Hebemechanismus (212) zumindest einen Bereichsbegrenzungsmechanismus umfasst, der den Hebemechanismus (212) daran hindert, die den Schienenwagen (112) über einen definierten Bereich hinaus zu verfahren.

14. Brückungsmodul (100) nach einem der Ansprüche 11 oder 12, worin der Hebemechanismus (212) eine kontinuierliche Positionsanzeige umfasst, die gemäß Signalen kalibriert ist, die von zumindest einem Bereichsbegrenzungsmechanismus empfangen werden, der den Hebemechanismus (212) daran hindert, den Schienenwagen (112) über einen definierten Bereich hinaus zu verfahren.

15. Brückungsmodul (100) nach einem der Ansprüche 11 bis 14, worin der Hebemechanismus (212) zumindest eine von einer kontinuierlichen Positionsanzeige und Hebemechanismus-Diagnoseinformationen umfasst, die durch drahtlose Kommunikation zugänglich sind.

## Revendications

1. Module de raccordement (100) configuré pour fournir une liaison de vide entre des premier et second volumes sous vide (114), le module de raccordement (100) comprenant :
une section de portail (102) comprenant des premier et second portails opposés (108, 110) configurés pour une fixation étanche respectivement aux premier et second volumes sous vide (114) ;
des premier et second éléments de porte (200, 202) configurés respectivement pour couvrir et sceller les premier et second portails (108, 110) ;
une section de stockage (104) s'étendant horizontalement à partir de la section de portail (102), les éléments de portail (200, 202) pouvant être translatés horizontalement par un mécanisme d'entraînement (210) entre une configuration déployée dans laquelle les éléments de portail (200, 202) sont situés dans la section de portail (102) et forment des joints avec les portails (108, 110), et une configuration rangée dans laquelle les éléments de portail (200, 202) sont situés dans la section de stockage (104) et ne recouvrent pas un passage formé entre les portails (108, 110) ; et
un mécanisme d'expansion (302) s'étendant entre les éléments de porte (200, 202) et configuré pour écarter les éléments de porte (200, 202) lorsque les éléments de porte (200, 202) sont dans la configuration déployée,
pressant ainsi les éléments de porte (200, 202) contre les portails (108, 110) ;
le module de raccordement (100) fournissant ainsi une liaison dégagée et sous vide entre les volumes sous vide (114) lorsque les éléments de porte (200, 202) sont dans la configuration rangée ; et
le module de raccordement (100) étant isolé des volumes sous vide (114) lorsque les éléments de porte (200, 202) sont dans la configuration déployée, permettant ainsi aux volumes sous vide (114) de rester sous vide en même temps que le module de raccordement (100) est mis à l'air libre.

2. Module de raccordement (100) selon la revendication 1, dans lequel les éléments de porte (200, 202) sont stabilisés par fixation coulissante de leurs parties supérieures aux rails supérieurs (300).

3. Module de raccordement (100) selon une quelconque revendication précédente, dans lequel le mécanisme d'entraînement (210) inclut une indication de position continue.

4. Module de raccordement (100) selon une quelconque revendication précédente, dans lequel le mécanisme d'entraînement (210) inclut au moins un mécanisme de limitation de plage qui empêche le mécanisme d'entraînement de déplacer les éléments de porte (200, 202) au-delà d'une plage définie.

5. Module de raccordement (100) selon une quelconque revendication précédente, dans lequel le mécanisme d'entraînement (210) inclut une indication de position continue qui est étalonnée en fonction de signaux reçus en provenance d'au moins un mécanisme de limitation de plage qui empêche le mécanisme d'entraînement (210) de déplacer les éléments de porte (200, 202) au-delà d'une plage définie.

6. Module de raccordement (100) selon une quelconque revendication précédente, dans lequel le mécanisme d'entraînement (210) inclut au moins un élément parmi une indication de position continue et des informations de diagnostic du mécanisme d'entraînement qui sont accessibles au moyen d'une communication sans fil.

7. Module de raccordement (100) selon une quelconque revendication précédente, dans lequel le mécanisme d'expansion (302) est entraîné pneumatiquement.

8. Module de raccordement (100) selon la revendication 7, dans lequel le mécanisme d'expansion (302) inclut quatre pistons pneumatiques opposés actionnés à l'air situés à proximité et entre quatre coins opposés des éléments de porte (200, 202).

9. Module de raccordement (100) selon une quelconque revendication précédente, dans lequel les premier et second volumes sous vide (114) sont des segments de tube d'un système de transport par tube sous vide.

10. Module de raccordement (100) selon la revendication 9, comprenant en outre un chariot sur rails (112) configuré, lorsque les éléments de porte (200, 202) sont dans la configuration rangée, pour fournir une continuité de rail entre des rails aériens qui supportent des capsules de transport à l'intérieur des segments de tube.

11. Module de raccordement (100) selon la revendication 10, comprenant en outre :
une section de chariot sur rails (106) s'étendant au-dessus de la section de portail (102) ; et
un mécanisme de levage (212) configuré pour soulever le chariot sur rails (112) au-dessus des éléments de porte (200, 202) lorsque les éléments de porte (200, 202) sont dans la configuration déployée.

12. Module de raccordement (100) selon la revendication 11, dans lequel le mécanisme de levage (212) fonctionne le long de rails verticaux qui s'étendent le long des deux côtés d'un logement de chariot situé à l'intérieur de la section de chariot sur rails (106).

13. Module de raccordement (100) selon l'une quelconque des revendications 11 à 12, dans lequel le mécanisme de levage (212) inclut au moins un mécanisme de limitation de plage qui empêche le mécanisme de levage (212) de déplacer le chariot sur rails (112) au-delà d'une plage définie.

14. Module de raccordement (100) selon l'une quelconque de la revendication 11 ou de la revendication 12, dans lequel le mécanisme de levage (212) inclut une indication de position continue qui est étalonnée en fonction des signaux reçus en provenance d'au moins un mécanisme de limitation de plage qui empêche le mécanisme de levage (212) de déplacer le chariot sur rails (112) au-delà d'une plage définie.

15. Module de raccordement (100) selon l'une quelconque des revendications 11 à 14, dans lequel le mécanisme de levage (212) inclut au moins un élément parmi une information d'indication de position continue et des informations de diagnostic de mécanisme de levage qui sont accessibles au moyen d'une communication sans fil.
